# EUROPEAN PATENT APPLICATION

(11) **EP 4 810 937 A1**
(43) Date of publication of application: **23.09.2026**
(21) Application number: 25164895.2
(22) Date of filing: 19.03.2025
(51) Int. Cl.: G01N 15/0205, G01N 15/10, G01N 15/1434

(54) **PARTICLE CHARACTERISATION**

(71) Applicant: Malvern Panalytical Limited, Malvern, Worcestershire WR14 1XZ (GB)
(72) Inventor: Lewis, Lloyd, Malvern, WR14 1XZ (GB); Corbett, Jason, Malvern, WR14 1XZ (GB)
(74) Representative: Barker Brettell LLP

(57) **Abstract**

A particle characterisation apparatus comprising: a sample cell (210), light source, detector (204), and interferometer. The interferometer comprises a moveable mirror (202) in a first optical path, a fixed mirror (201) in a second optical path, and a combiner (203) arranged to i) split an input light field onto the first optical path and the second optical path and ii) produce an output light field by combining light from the first optical path and the second optical path. The apparatus is configured to determine a spectrum of scattered light at each of a plurality of scattering angles by performing Fourier transform spectroscopy, wherein performing Fourier transform spectroscopy comprises adjusting a length of the first optical path using the moving mirror (202).

## Description

### Field of the invention

The present disclosure relates to particle characterisation, and to improvements in particle characterisation.

### Background

Particles may be characterised by light diffraction, in which a beam of light illuminates a sample comprising particles and the variation in scattered light over a range of scattering angles is detected. The scattering pattern (i.e. the variation in the intensity of scattered light vs scattering angle) can be used to determine an average particle size, or a particle size distribution, based on Mie scattering theory.

An example of an instrument for characterising particles using light diffraction is the Mastersizer 3000, from Malvern Panalytical Ltd, UK. This instrument comprises two light sources with different wavelengths and detectors arranged to receive light scattered at different angles to the illuminating light beam. The light sources sequentially illuminate the sample, and the resulting combined scattered data is used to characterise the particles.

Fourier transform infrared spectroscopy (FTIR) has been widely applied in microplastic pollution research (for a recent review, see Veerasingam, S., et al. "Contributions of Fourier transform infrared spectroscopy in microplastic pollution research: A review. " Critical Reviews in Environmental Science and Technology 51.22 (2021): 2681-2743*).*

Combining information about a particle spectrum and the physical scattering from the particle may elucidate complementary information about the particle, with the former providing information about the material comprising the particle, and the latter providing information about the particle size and/or shape.

### Summary

According to a first aspect, there is provided a particle characterisation apparatus comprising:
a sample cell for containing or supporting a sample comprising particles;
a light source configured to produce a polychromatic illumination beam for illuminating the sample along an illumination optical path, thereby producing scattered light from the interaction of the illumination beam with particles of the sample;
a detector arranged to receive and detect the scattered light propagating along a detection optical path and thereby detect a variation in scattering intensity with respect to scattering angle; and
an interferometer, the interferometer comprising:
   a moveable mirror in a first optical path;
   a fixed mirror in a second optical path; and
   a combiner arranged to: i) split an input light field onto the first optical path and the second optical path; and ii) produce an output light field by combining light from the first optical path and the second optical path; and wherein
the apparatus is configured to determine a spectrum of scattered light at each of a plurality of scattering angles by performing Fourier transform spectroscopy, wherein performing Fourier transform spectroscopy comprises adjusting a length of the first optical path using the moving mirror.

The apparatus may comprise a processor configured to determine a particle characteristic from the variation in scattering intensity with respect to scattering angle.

The processor may be configured to determine a particle characteristic from the absorption spectrum.

The combiner may comprise a partially transparent beam splitter.

The apparatus may comprise an actuator arranged to move the moveable mirror in response to a control signal (which may be provided by a processor or controller).

The interferometer may be disposed in the detection optical path, or in the illumination optical path.

The sample cell may be disposed between the interferometer and the light source.

The interferometer may be configured to receive scattered light from the sample cell as the input light field. In this configuration the interferometer may be considered illuminated by the sample cell.

The sample cell may be disposed between the interferometer and the detector.

The interferometer may be configured to receive the polychromatic illumination beam from the light source as the input light field. In this configuration the sample cell may be considered illuminated by the interferometer.

A polarising filter or a polarising beam splitter may be disposed in the detection optical path. The detector may comprise a first detector portion that detects a first polarisation state of scattered light, and a second detector portion that detects a second polarisation state of scattered light, with the first polarisation state different to the second polarisation state.

The first detector portion and the second detector portion may each comprise array detectors (e.g. a 1D array or a 2D array detector).

The light source may comprise a broadband light source and a narrow-band light source (e.g. a laser source). The broadband light source may produce light with a spectral bandwidth (FWHM) of at least 500nm. The narrow-band light source may produce light with a spectral bandwidth of less than 50nm.

The light source may be configured to produce light comprising wavelengths with a spectral bandwidth of at least 500nm, or at least 1000nm or at least 2000nm, or at least 3000nm. The spectral bandwidth may comprise wavelengths that are less than 500nm, and wavelengths that are at least 2000nm.

The light source may comprise at least one of: a globar emitter, a supercontinuum laser, and an incandescent light source (optionally a halogen incandescent light source).

The apparatus may comprise a processor configured to:
measure a background, corresponding with a measurement from the detector when the sample cell is loaded with a background sample;
measure a sample, corresponding with a measurement from the detector with the sample cell loaded with the sample; and
subtract the background from the sample measurement to determine a corrected sample measurement.

The background sample may comprise a dispersant with no particles. The sample may comprise the same type of dispersant as the background sample (e.g. water, a specific buffer, etc). The background sample may comprise a dispersant with particles, and the sample may comprise the same dispersant and particles as the background sample, but with a higher concentration of particles. The background sample may comprise a dispersant with particles, and the sample may comprise the same dispersant and particles and further admixture particles.

In measurements that are polarisation sensitive, in which a plurality of different measurements are taken corresponding with different polarisation states, measurement of the background may comprise obtaining a plurality of measurements corresponding with the different polarisation states.

The apparatus may be configured to obtain at least one interferogram, obtained by varying the length of the first optical path by moving the moveable mirror and measuring light received at the detector.

The apparatus may comprise a processor configured to obtain a reference interferogram, measured with no sample present, and a sample interferogram measured with a sample present in the sample cell. A processor may be configured to determine an absorption spectrum of the sample with reference to the reference interferogram and the sample interferogram.

The apparatus may be configured to determine an absorption spectrum for each of a plurality of different scattering angles. The different scattering angles may comprise at least one of: a forward scattering angle, a side scattering angle, and a backward scattering angle. A scattering angle may be defined as an angle between a propagation direction of the illumination optical path in the sample and the detection optical path in the sample. Forward scatter may be defined as having a scattering angle of 89 degrees or less, side scattering may be defined as having a scattering angle of 90 degrees, and backward scatter may be defined as having a scattering angle of 91 degrees or more.

The apparatus may comprise an adjustable polarising filter in the detection optical path, configured to control a polarisation state received at the detector. The apparatus may be configured to obtain a plurality of spectra, each corresponding with a different polarisation state of scattered light (and optionally, a spectra for each of a plurality of combinations of different scattering angles and different polarisation states).

The apparatus may comprise a plurality of different polarising filters and at least one beam splitter, the at least one beam splitter and the plurality of different polarising filters arranged to distribute different polarisation states of scattered light to different portions of the detector, so that each of a plurality of polarisation states of scattered light can be detected at the same time. The apparatus may be configured to obtain a plurality of spectra, each corresponding with a different polarisation state of scattered light (and optionally, a spectra for each of a plurality of combinations of different scattering angles and different polarisation states).

According to a second aspect, there is provided a particle characterisation apparatus comprising:
a sample cell for containing or supporting a sample comprising particles;
a light source configured to produce a polychromatic illumination beam for illuminating the sample along an illumination optical path, thereby producing scattered light from the interaction of the illumination beam with particles of the sample;
a detector arranged to receive and detect the scattered light propagating along a detection optical path and thereby detect a variation in scattering intensity with respect to scattering angle; and
an interferometer, the interferometer comprising:
   a first grating in a first optical path;
   a second grating in a second optical path; and
   a combiner arranged to: i) split an input light field onto the first optical path and the second optical path; and ii) produce an output light field by combining light from the first optical path and the second optical path; and wherein
the apparatus is configured to perform spatial heterodyne spectroscopy.

The sample may be between the light source and the interferometer. The input light field to the interferometer may comprise the scattered light propagating along the detection optical path.

The interferometer may comprise an entrance slit configured to receive a range of scattering angles.

The first grating and the second grating may each comprise reflective gratings.

According to a third aspect, there is provided a method of characterising particles, comprising:
illuminating a sample with polychromatic light, the sample comprising particles suspended in a fluid, thereby producing scattered light;
performing Fourier transform spectroscopy using an interferometer to determine a spectrum for each of a plurality of scattering angles of the scattered light.

The method may comprise illuminating the sample with a light output from the interferometer. The method may comprise receiving scattered light from the sample at the interferometer.

The interferometer may comprise a first path and a second path, the second path having a variable optical path length, and the first path having a fixed optical path length. Using the interferometer may comprise varying the length of the first path.

Performing Fourier transform spectroscopy may comprise receiving, at a detector, a plurality of scattering angles of the scattered light, a using the detector to measure a variation in intensity of the scattered light with respect to scattering angle and a variation in intensity of the scattered light with respect to wavelength for each of the plurality of scattering angles.

The method of the third aspect may comprise using the apparatus according to the first aspect, including any optional features thereof. Method features described with reference to apparatus according to the first aspect may be applied in the method of the third aspect.

According to a fourth aspect, there is provided a method of characterising particles, comprising:
illuminating a sample with polychromatic light, the sample comprising particles suspended in a fluid, thereby producing scattered light;
performing Fourier transform spectroscopy using an interferometer to determine a spectrum for each of a plurality of scattering angles of the scattered light.

### Brief description of drawings

Figure 1 is a prior art instrument for particle characterisation by light diffraction;
Figure 2 is an example embodiment;
Figure 3 is an example measured interferogram;
Figure 4 shows a reference interferogram and a measured interferogram;
Figure 5 shows an example embodiment in which a sample cell is illuminated by n interferometer;
Figure 6 shows a further example embodiment in which a sample cell is illuminated by an interferometer;
Figure 7 shows an example embodiment in which an interferometer receives scattered light from the sample;
Figure 8 shows a further example embodiment in which an interferometer receives scattered light from the sample;
Figure 9 shows an example embodiment comprising a polarising beam splitter;
Figure 10 shows an example embodiment in which amplitude splitting polarimetry is employed;
Figure 11 shows an example embodiment for time multiplexed polarimetry;
Figures 12 to 15 show calibration methods; and
Figure 16 shows an embodiment employing spatial heterodyning.

### Detailed description

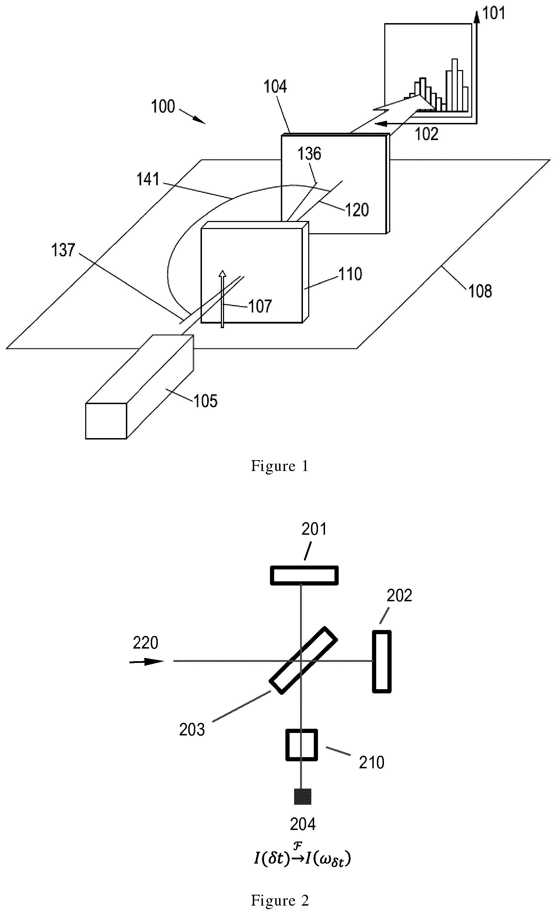

Referring to Figure 1, a prior art instrument 100 for characterisation of particles by light diffraction is depicted schematically. The apparatus 100 comprises a light source 105, sample cell 110 and detector 104.

The light source 105 is typically monochromatic and preferably spatially coherent, so typically comprises a laser (although some instruments comprise an LED light source). The light source 105 creates an illumination beam 120 that illuminates a sample. The interaction of the light beam 120 with particles of the sample result in scattering/diffraction of the light beam 120. The pattern of scattering that is produced is characteristic of the particle size (and/or particle size distribution).

The sample cell 110 supports and/or contains a sample comprising particles suspended in a liquid or gas phase diluent and may comprise a cuvette, flow cell or slide (for supporting a droplet of sample).

The detector 104 is configured to detect the pattern of scattered light resulting from the interaction of the illumination beam 120 with the particles of the sample, recording the intensity of detected scattered light 101 at several different angles 102. A particle size or particle size distribution can be calculated from the variation in scattering intensity at different scattering angles, for example using Mie scattering theory.

The illuminating light beam 120 is typically linearly polarised. In this example the polarisation orientation 107 is vertical. Scattered light is often detected in a scattering plane 108, which is defined as a plane that includes the illuminating light beam 120 in the sample and which is normal to the polarisation orientation of the illuminating light beam 120 in the sample. A range of scattering angles 141 can be detected, including forward scattered light 136 (with a component of propagation direction in the same direction as the illumination light beam 120), side scattered light (with a propagation direction perpendicular to the illumination light beam) and backward scattered light 137 (with a component of propagation direction in the opposite direction to the illumination light beam 120).

It is known to employ two light sources, each having a different wavelength. For example, the instrument may include a red laser and a blue LED which illuminate the sample along different optical paths. In order to avoid confusion between scattering at different wavelengths (which may make inversion of the scattering pattern more difficult or impossible), sequential illumination and/or dedicated detectors are used.

In addition to characterising particles based on the pattern of diffracted light, it is also known to characterise particles based on how the intensity of light scattering in a particular scattering direction varies over time. Brownian motion means that particles with a lower hydrodynamic radius produce scattered light that fluctuates more rapidly than particles with a higher hydrodynamic radius.

This type of analysis is referred to as dynamic light scattering (DLS) or photon correlation spectroscopy (PCS). A spatially coherent monochromatic light is typically used in dynamic light scattering and scattered light is detected over a relatively narrow range of scattering angles (e.g. over a range of scattering angles of 5 degrees or less, or 2 degrees or less, so that the q-vector of the scattered light is relatively well defined). A photon counting detector such as an avalanche photodiode is typically employed, which is capable of providing a time history of scattering intensity with high temporal resolution. An autocorrelation is performed to determine a correlogram of the light scattering intensity, and the correlogram processed (e.g. using Cumulants or a nonlinear least squares method) to determine a particle size or particle size distribution. As an alternative (but equivalent) to correlation, a frequency domain analysis can be performed (e.g. using Fast Fourier Transform analysis). In some instruments, multiple scattering angles may be detected, and analysis performed on the data from multiple scattering angles (each with well-defined q-vectors). Such analysis may be termed Multi-Angle DLS (MADLS).

In the context of both diffraction based particle characterisation and dynamic light scattering, different wavelengths of light enable additional data to be obtained about the sample. In the case of dynamic light scattering additional wavelengths of illumination can be considered similarly to additional detected scattering angles, and can be used to reduce measurement uncertainties (and to increase the accuracy of characterisation).

In diffraction based measurements, additional wavelengths can extend the range of particle sizes that can be characterised. It is difficult to arrange for more than two wavelengths of illumination and detection in a conventional instrument. Each monochromatic light source typically needs a bespoke array of detector elements arranged on the scattering plane, which is not straightforward.

Figure 2 is a schematic diagram of an example embodiment, comprising a fixed mirror 201, moving mirror 202, beam splitter 203, sample cell 210 and detector 204.

The sample cell 110 is illuminated by a Michelson intereferometer formed from the fixed mirror 201, moving mirror 202 and the beam splitter 203. An illumination light beam 223 from a polyspectral light source (not shown) is split by beam splitter 203 so that a portion of the light beam is directed to the fixed mirror 201 and a portion of the light beam is directed to the moving mirror 202. The light from the fixed mirror 201 and the moving mirror 202 is recombined by the beam splitter 203 and the sample cell 210 is illuminated by the recombined beam from the interferometer.

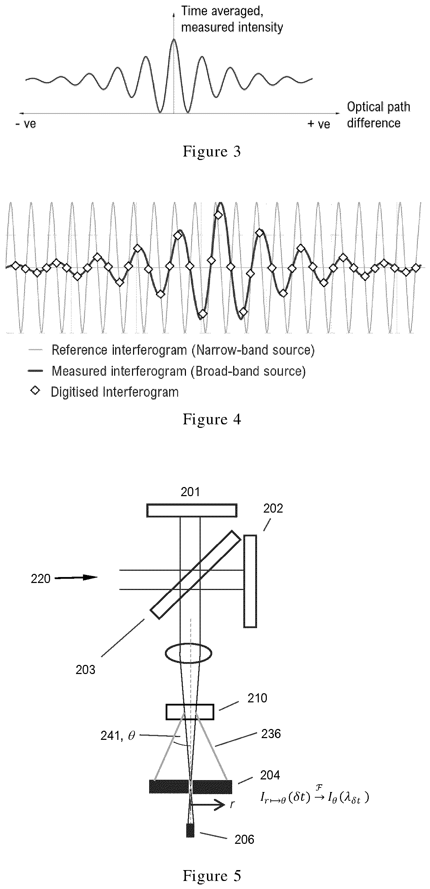

Figure 3 shows a schematic example of a measured interferogram. The intensity at the detector varies as the path length is adjusted. The oscillatory behaviour and the shape of the envelope are associated with the relationship between the wavelengths present and the optical path length difference. The Fourier transform of the interferogram converts the intensity variation in the time domain to an intensity variation in the frequency domain. The frequency domain intensity variation corresponds with a spectrum of the light.

A number of advantages are associated with Fourier transform spectroscopy:
- Throughput advantage: dispersive spectrometers require an entrance slit that limits the amount of light that can be collected. In a Fourier transform spectrometer the input light is limited only by the size of the input beam to the interferometer.
- Wavelength accuracy advantage: Fourier transform spectrometers may include an internal narrowband calibration source, such as a HeNe laser. The linewidth of the narrowband calibration source may be narrow enough to create sinusoidal fringes on the interferometer detector. In order accurately reconstruct the spectrum using a Fourier transform, the interferogram must be sampled at well-defined intervals. The sampling may be determined with reference to zero-crossings of the narrowband laser interferogram (or another phase-sensitive feature). For example, each time the narrowband interferogram crosses zero (indicating an optical path length difference step of half the narrowband wavelength), a sample of the broadband interferogram may be taken. This approach may be referred to as digitising the broadband interferogram. This approach is illustrated in Figure 4.
- Multi-plex advantage: Fourier transform spectroscopy collects all wavelengths at the same time, which means that the signal can be recorded faster than would be the case in a dispersive spectroscope, leading to higher throughput and improved signal to noise ratio.

Fourier transform spectroscopy may be applied to record micro and nano particle absorption and emission spectra, with applications including the characterisation of proteins, metal nanoparticles, pollen grains, micro and nano plastics in water, the encapsulation of pharmaceuticals within nanoparticles, nanoparticle applications for food development. In infra-red Fourier transform spectroscopy there may be negligible contribution from light scattering. In UV, visible and near-IR there may be significant light scattering, which can be used to elucidate particle size (e.g. size distribution) and morphology based on the distribution of scattered light with respect to scattering angle (using Mie theory, or a simplification thereof).

In general, the spectrum of a sample provides a fingerprint that can be used to identify specific molecules or functional groups from a spectral database. For example, functional groups such as C=O, O-H and C-H have characteristic absorption peaks. The position, intensity and shape of spectral features can also provide information about bonding of molecules and stereo-isomers: spectra can be used to distinguish between different stereo-isomers, and to provide insights into molecular vibrations and bond strengths. The spectral shape can also indicate a phase of a sample, for example crystalline or amorphous. The spectrum may also be used to determine refractive index.

Fourier transform spectroscopy can be performed by illuminating the sample using the interferometer, or by illuminating the interferometer with light from the sample. Example embodiments employing both these approaches are described below.

Figure 5 shows an example diffractive Fourier transform spectroscope, in which a spectrum is determined for each of a plurality of scattering angles. The spectroscope comprises: light source (not shown); sample cell 210, fixed mirror 201, moving mirror 202, beam splitter 203, detector 204, and obscuration detector 206.

The light source produces a polychromatic input light beam 222. The light beam 223 may comprise broadband light from a broadband source and narrow band reference light from a narrow band reference source such as a HeNe laser (as discussed in more detail below).

The illuminating light beam 223 is received at a Michelson interferometer comprising the fixed mirror 201, moving mirror 202 and beam splitter 203. The moving mirror 202 may be supported by an actuator (not shown) which is in turn under the control of a processor or controller. Movement of the moving mirror 202 changes an optical path length difference between each leg of the interferometer.

Light from the interferometer illuminates the sample cell 210, which may support or contain a sample comprising particles in a diluent fluid. The sample cell 210 may comprise a flow cell, for example.

The particles of the sample cause the light illuminating the sample to be scattered. The distribution of scattering intensity with respect to angle at each wavelength will depend on the size of the particles, the refractive index of the particles, and the morphology of the particles. An example scattering angle 236 is shown, and the detector 204 is an array detector arranged to detect a plurality of different scattering angles. In this example, the detector 204 is arranged to detect forward scattered light, but other directions of scattering can also be detected. The wavelength dependency of the scattered light can be used to infer compositional information about the particles, as discussed above.

The detector 204 is an array detector, and therefore detects a plurality of interferograms, each interferogram corresponding with a specific scattering angle (or range of scattering angles, given that each element of an array detector will sample a range of scattering angles). Information about the particle size, morphology and composition can be determined from the interferograms, as outlined above.

An obscuration detector 206 is arranged to detect the illuminating light beam after it has passed through the sample cell 210. This allows a total absorption from the sample to be determined, which is a useful parameter (for example in determining a concentration). In this embodiment an inverse Fourier arrangement is used, in which a lens 212 before the sample cell 210 produces a converging beam in the sample cell 210.

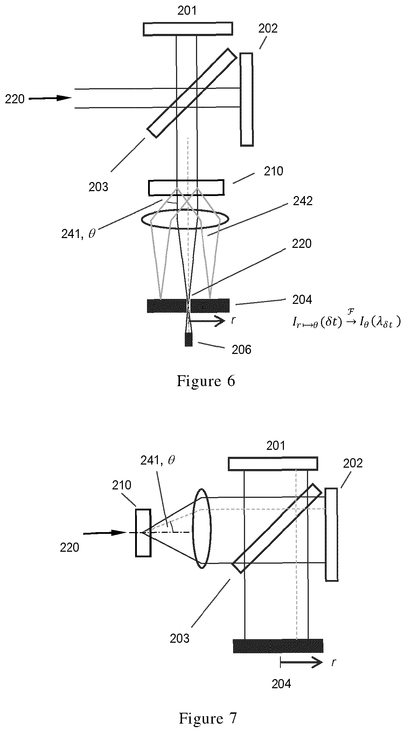

Figure 6 shows an example diffractive Fourier transform spectroscope, in which a spectrum is determined for each of a plurality of scattering angles. The spectroscope comprises: light source (not shown), sample cell 210, fixed mirror 201, moving mirror 202, beam splitter 203, detector 204, and obscuration detector 206. A Fourier transform lens 211 is provided between the sample cell 210 and the detector 204.

The interferometer works in the same way as described with reference to Figure 5 and produces a collimated illumination beam. The sample cell 210 is illuminated with the collimated light beam from the interferometer. Particles in the sample cell 210 produce scattered light with a range of scattering angles 241. The Fourier transform lens 211 maps each of the angles onto a different position on the detector 204. The detector 204 is an array detector, and again detects a plurality of interferograms, each interferogram corresponding with a specific scattering angle (or range of scattering angles, given that each element of an array detector will sample a range of scattering angles). Information about the particle size, morphology and composition can be determined from the interferograms, as outlined above.

The obscuration detector 206 provides the same functionality as described with reference to Figure 5.

Figure 7 shows a further example diffractive Fourier transform spectroscope in which a spectrum is determined for each of a plurality of scattering angles. The spectroscope comprises: light source (no shown), sample cell 210, fixed mirror 201, moving mirror 202, beam splitter 203, detector 204, and obscuration detector 206.

A Fourier transform lens 211 is provided between the sample cell 210 and the interferometer. The sample cell may, for example, be illuminated with a collimated light beam, and particles of the sample within the sample cell 210 scatter the light at various scattering angles 241. The Fourier transform lens 211 maps these scattering angles to different spatial positions on the detector 204, via the interferometer (which functions in the same way as described with reference to Figure 5).

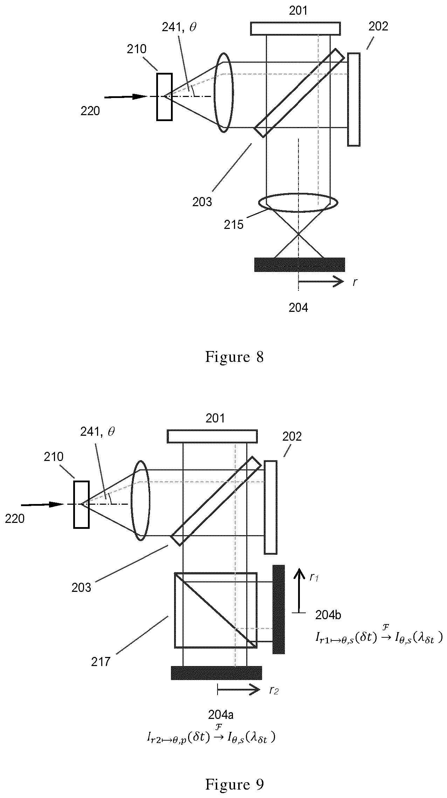

The example spectroscope shown in Figure 8 is similar to that of Figure 7, with the addition of a further lens 215 between the interferometer and the detector 204. The lens 215 may be arranged to magnify or demagnify the beam entering the lens 215 to better match a specific detector, or to create an appropriate compromise between angular resolution and the intensity of the detected scattering pattern.

Figure 9 shows a polarisation sensitive diffractive Fourier transform spectroscope, which is similar to the example of Figure 7, except that the detector 204 is split into a first detector array 204a and a second detector array 204b, and there is a polarising beam splitter 217 disposed between the detectors 204a, 204b and the interferometer. The polarising beam splitter 217 is configured to direct different polarisation states to different detectors 204a, 204b. For example, the first detector array 204a may receive a polarised light, and the second detector array 204b may receive polarised light.

A polarisation selector like the polarising beam splitter can be used in any of the example detection arrangements described above. These are not depicted for brevity herein.

The throughput advantage of Fourier transform spectroscopy is clear in these examples. Compared with dispersive spectroscopy methods, in which an entrance slit cuts down the amount of gathered light, Fourier transform spectroscopy is only limited by the entrance pupil of the diffractive Fourier spectroscope, and therefore gathers more light. For the same overall instrument scale, a Fourier transform spectroscope can provide a better spectral resolving power than a dispersive spectroscope. The throughput and wavelength accuracy advantages can also be realised, with improved signal to noise and more accurate compositional analysis performed. In some embodiments, Raman spectroscopy may be performed using the spectra obtained for each scattering angle.

In each example, the illuminating light beam (not scattered) may be detected using obscuration detector 206. This allows an estimate of the sample obscuration (of the illuminating light path). This is a useful metric which may be reported to the user. The obscuration may be used as a guide to determine when a sample concentration is sufficient to give an appropriate signal to noise in the measurement. The obscuration detector will also record an interferogram, from which a spectrum of the entire sample can be inferred. This "whole sample" spectrum may prove useful for a similar reason, and also to allow analytical checks against spectra recorded at different scattering angles. For example, the obscuration detector may be used in creating a calibration measurement using a standard sample, or to detect dirt on the sample cell, particularly if the windows are dirty to different degrees where the illuminating beam and the scattered light pass through.

Each of the examples shown in Figures 5 to 9 may be adapted to detect side scattered light, or backscattered light. The illumination of the sample may be in a different direction to that shown in the drawings. For example, the illumination light beam in Figures 7 to 9 may be normal to the plane of the page, for side scatter detection. In the examples of Figure 5 and 6, the detection arrangement may be arranged to detect side scatter or back scatter.

The design of an instrument that detects infra red may be arranged to minimise detection of light from thermally emitting surfaces. For example, an optical system may be configured to place the exit pupil remote from such surfaces. In embodiments, a dispersant/instrument background can be measured and removed from the sample measurement for both diffraction and spectral measurements, and this may mitigate such effects. Another way to help minimise errors arising from thermal emission is to ensure that the instrument has thermally equilibrated before a measurement has taken place.

### Input illumination

As discussed above, in certain embodiments the light source may comprise a broadband source and a narrow-band source (used as a reference). The narrow-band source preferably has a sufficiently high coherence time to create a sinewave across the interferogram of sufficient signal-to-noise to be able to estimate the locations where it periodically passes through zero to high precision. An example of a suitable narrow-band source includes a HeNe laser. The reference interferogram may be used to provide a trigger to measure the spectroscopic signal as it passes through zero, or the reference and broadband sources may be run asynchronously. This enables the reference interferogram and the sample interferogram to be detected using a single detector. The detector may interleave measurements of the reference interferogram with measurements of the sample interferogram. The rate of interleaving may be sufficiently high (with respect to the rate of change of the path length) that interpolation may be used to reconstruct the respective interferograms.

Fourier transform spectroscopy can be performed, in principle at any wavelength. Particularly suitable wavelengths include from UV to the IR (e.g. 350nm to 25 microns, or 500nm to 15 microns). Some examples of suitable broadband sources are listed in the below table:

**Table 1: Example broadband light sources**

| Manufacturer | Product | Wavelength ranges |
|---|---|---|
| Thorlabs | SLS303 - Stabilized Silicon Nitride Globar light source | 550 nm to 15 µm |
| NKT Photonics | Fianium Supercontinuum light source | 450 nm to 2500 nm |
| Bentham | ILD-D2-QH Deuterium-Halogen Source | 200 nm to 2500 nm |
| Bentham | IL1 Halogen Source | 350 nm to 4000 nm |
| Bentham | ILD-QH-IR Halogen-SiN Source | 350 nm to 30µm |
| ArcOptics | ARCLIGHT-NIR | 400 nm to 4 um |
| ArcOptics | ARCLIGHT-MIR | 1 um to 25 um |

The above light sources can be used in combination, for example to access a wider range of wavelengths. Other light sources can be used, and the above are merely exemplary.

### Measurement modes

The sample comprises particles in a dispersant fluid. A dispersant background or reference interferogram may be measured and subtracted from a measurement of the sample in order to isolate the signals associated with the particles. The dispersant background may be a liquid or a gas (e.g. air). In the case where the dispersant is a gas, the gas flow is preferably stable in velocity and thermal profile over the duration of the measurement.

The reference interferogram may be obtained from any convenient scattering angle, or any combination of scattering angles. Preferably, scattering angles should be selected with sufficient signal-to-noise for internal referencing.

One application for instruments that can measure a spectrum of scattered light at each of a plurality of scattering angles is to identify spectra per particle size mode in the particle size distribution. Laser diffraction is also commonly used in applications where it may be assumed that the dispersion is homogenous with regards to its material content; therefore, the spectra may be reported or analysed on a per scattering angle basis or summed over multiple scattering angles. Such summation may improve the signal to noise in the spectra. An apparatus according to an embodiment may allow the selection of either of these approaches. Such a selection could be made by a user or made automatically by a processor, for example based on a measure of homogeneity in the spectra.

The examples provided above have been depicted as detecting forward scattering angles. Light scattering instruments often collect light in at least two of forward, side and backscatter. These are commonly used terms not meant to imply that 'gaps' exist in the collection in the angular distribution of light. Embodiments may employ similar detection arrangements for side scatter and/or back scattered light, as an alternative or in combination with the exemplary forward scattering arrangements provided herein.

In embodiments that comprise a narrow band light source in addition to a broad band light source, a laser diffraction particle analysis (e.g. to determine particle size and/or particle size distribution) may be performed using the narrow band light source, with spectral analysis at more than one scattering angle performed using the broad band source.

### Mie scattering ellipsometry (MSE)

Laser diffraction is able to reproduce a particle size distribution from the distribution of intensity of scattered light at different scattering angles (when illuminated by a monochromatic, spatially coherent light source). However, an estimate of the particle (and dispersant) refractive index (RI) is required for this. Traditionally this refractive index has been obtained by requesting that the user supply it. This process is manageable for samples that are known and have a well-characterised refractive index, but variations in RI are known to exist by geographical location for some minerals and many materials do not have well accepted values. For spherical, monodisperse samples, it is possible to use principle component analysis to simultaneously derive the particle size and refractive index (see WO2023/285841). It is possible to measure the particle refractive index and other quantities associated with the particle morphology and dispersion using Mie scattering ellipsometry (MSE), according to certain embodiments.

Single scattering requires that particle dispersions are sufficiently dilute such that substantially all light reaching the detector is scattered singly from a particle, from the illuminating beam and is not multiply scattered, where light impinging on a particle in the dispersion may come from some combination of the illuminating light source and from other particles. Multiple scattering starts to occur as the sample concentration increases and for a sufficiently concentrated sample, little or no single scattering is left to reach the detector. MSE provides an estimate of the polarisation state of the light scattered from a particulate sample. The polarisation state of the light scattered from dispersed, single scattering particulate samples may be described using the ellipsometric quantities, tan Ψ and Δ.

For single, spherical particles that are of homogenous composition $tan Ψ . exp \left(iΔ\right) = \frac{{S}_{p}}{{S}_{s}}$ e ***Sₚ*** and ***Sₛ*** are elements of the scattering matrix defined using the particle size, refractive index, and scattering angles. However, for the more general case, when the particle characteristic distribution (size, RI, morphology, etc.) is polydisperse, some of the polarised light illuminating the sample is depolarised by the sample and recourse to the Stokes vector and Mueller matrix formalism is needed to describe the polarisation state of the scattered light. In this case: $\left(\begin{matrix}I \\ Q \\ U \\ V\end{matrix}\right) = I . \left(\begin{matrix}1 \\ - cos \left(2Ψ\right) \\ μ . sin \left(2Ψ\right) cos \left(Δ\right) \\ μ . sin \left(2Ψ\right) sin \left(Δ\right)\end{matrix}\right)$ where,
*µ* is the degree of coherence in the scattered light
*I* is the total intensity of the scattered light
*Q = I*₀ *- I₉₀* is the difference in intensities between the linearly polarised components of the scattered light with polarisation vector parallel to the scattering plane and perpendicular to the scattering plane
*U* = *I*₊₄₅ - *I*₋₄₅ is the difference in intensities between the linearly polarised components of the scattered light with polarisation vector at +/-45 degrees to the scattering plane
*V = I_{rcp} - I_{lcp}* is the difference in intensities between the right circular polarised component of the scattered light and the left circular polarised component of the scattered light.
   and $Ψ = - \frac{1}{2} {cos}^{- 1} \left(\frac{Q}{I}\right)$ $Δ = - {tan}^{- 1} \left(\frac{V}{U}\right) for U \geq 0 or 180 ° for U < 0$

The degree of coherence µ cancels in equation (3b), leaving the estimate of the ellipsometric quantities Ψ and Δ independent of the degree of coherence. Data for evaluating both equations (3a) and (3b) can be obtained via the various specific embodiments described herein.

Particle refractive index can be determined from the ellipsometric quantities, tan Ψ and Δ obtained from a single scattering angle measurement (e.g. 90 degrees). Generally, significant numerical constraints and an initial guess may be needed in order to achieve this. Potentially a more precise and accurate estimate for particle refractive index can be extracted from tan Ψ vs scattering angle and Δ vs scattering angle using a Mie scattering mathematical reduction. A stepwise polyspectral measurement of scattering can be used to resolve ambiguity between changes in particle size and refractive index.

A Brewster angle exists for Mie scattering ellipsometry at a scattering angle of 90 degrees resulting in a higher variation in tan Ψ and Δ with scattering angle and this why this angle may be preferred for MSE measurements; however, it is also possible to perform Mie scattering ellipsometry at higher or lower scattering angles.

Light scattering from an arbitrary sample will depend on a characteristic distribution of the sample (size, RI, internal morphology, aggregation or agglomeration state, solvent structure at and around the particle, etc.) and the particle characteristic spectra (e.g. material composition, fluorescence, etc.). For an arbitrary sample, these will all be unknown, so that a single scattering angle, single wavelength measurement system is not appropriate for the general case (where arbitrary samples are to be analysed) and particularly for time-resolved measurements which are not compatible with step-wise (angle, wavelength, etc.) instruments (i.e. instruments which use sequential sampling at different scattering angles and different wavelengths).

Selecting a single detection angle to match the scattering pattern of the sample can be automated on the basis of angular scattering data recorded from the sample. The simultaneous detection of scattering intensity at multiple scattering angles and multiple wavelengths is an important feature of embodiments, providing significant advantages such as enabling fitting across multi-spectral data to remove ambiguity associated with non-uniqueness of the ellipsometric quantities for simultaneous changes in particle size and particle refractive index (for example) which would be present in single wavelength time-resolved measurements of an arbitrary sample.

The data required to analyse MSE quantities is encoded in the polarised component of the scattered light, so even though the Stokes Vector and Mueller matrix formalism has been presented, it is also possible for the schemes presented herein to be applied to an instrument in which the basis for analysis is the Jones formalism, which only describes the fully coherent case.

There are two primary families of diffractive-spectra-polarimeter schemes that can be used to collect time-resolved MSE and LD data that either i) measure Stokes (or Jones) vector quantities simultaneously by splitting the amplitude of scattering between different detectors; or ii) measure the Stokes (or Jones) vector quantities sequentially in time.

### Single shot Stokes vector measurement for MSE

Some embodiments may be suitable for analysis of polarisation state. In an amplitude splitting arrangement different portions of a detector are arranged to receive different polarisation states. A first portion of a detector may receive a range of different scattering angles and a first polarisation state, a second region of the spectrometer entrance slit may receive the same range of scattering angles and a second, different polarisation state, and so on. The polarisation states may be selected to allow the Stokes vector to be determined. For example, the polarisation states mapped to different regions of the entrance slit may comprise: linear polarised light with polarisation orientations of 0 degrees, 90 degrees, -45 degree and +45 degrees, left hand circular polarised light and right hand circular polarised light. These polarisation states correspond with the elements of the Stokes vector and can be used to determine the Stokes vector for each scattering angle and wavelength that is detected.

It is also possible to determine the Stokes vector from four selected polarisations of light, and embodiments are envisaged which select four different polarisation states from which a Stokes vector may be determined (e.g. optimally) at which intensities at different scattering angles and different wavelengths will be simultaneously detected.

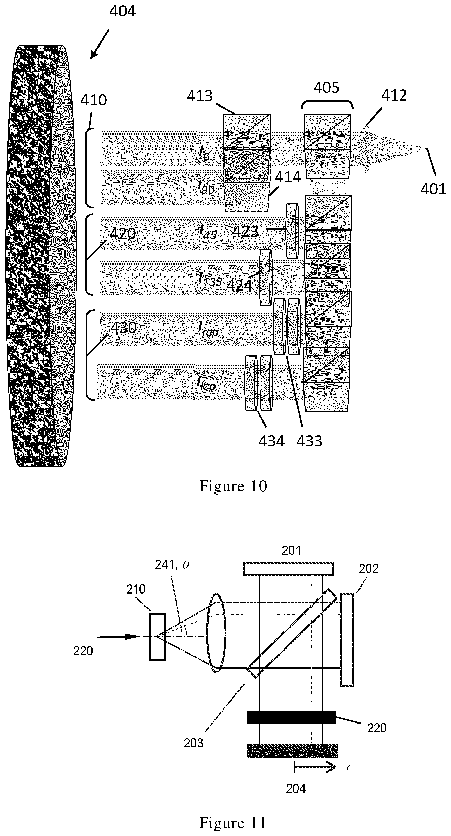

Figure 10 shows a schematic of an amplitude splitting diffractive spectra-polarimeter which may be used for ellipsometry, in which polychromatic scattered light 401 obtained by illuminating a sample with an interferometer is collected by (optional) collection optic 412. The illumination of the sample and collection optic is essentially as shown in Figure 6, with the sample illuminated by the interferometer with a collimated interferometric illumination beam. The scattered light 401 is mapped into different spatial regions of a collimated scattered light beam by the collection optic 412. The collection optic 412 receives a range of different scattering angles (e.g. of at least 20 degrees).

The scattered light 401 is split into three legs by non-polarising beam splitters 405. The final beam splitter may be replaced with a simple reflector.

In the first leg 410, a polarising beam splitter 413 selects vertical and horizontal linearly polarised light. The component of the scattered light with a vertical linear polarisation *(I_0)* is mapped to a first region of detector 404 with different scattering angles mapping to different positions in the first region. The component of the scattered light with a horizontal linear polarisation (*I*₉₀) is mapped to a second region of the detector 404 (e.g. via reflector 414), with different scattering angles mapping to different positions in the second region.

In the second leg 420, a 45 degree linear polarising filter 423 selects scattered light with a polarisation orientation of 45 degrees (*I*₄₅). A 135 degree linear polarising filter 424 selects -45 degree linearly polarised light (*I*₁₃₅). The component of the scattered light with a +45 degree linear polarisation is mapped to a third region of the detector 404, with different scattering angles mapping to different positions in the third region. The component of the scattered light with a -45 degree linear polarisation is mapped to a fourth region of the detector 404, with different scattering angles mapping to different positions in the fourth region.

In the third leg 430, a beam splitter provides scattered light to a quarter waveplate and a -45 degree linear polariser 433 to select right circular polarised light (*I_{rcp}*). A further beam splitter provides scattered light to a further quarter waveplate and a +45 degree linear polariser 434 to select left circular polarised light (*I_{lcp}*). The component of the scattered light with a right circular polarisation is mapped to a fifth region of the detector 404, with different scattering angles mapping to different positions in the third region, The component of the scattered light with a left circular polarisation is mapped to a sixth region 432 of the detector 404, with different scattering angles mapping to different positions in the fourth region.

Modifying the path length using the moveable mirror allows interferograms to be obtained corresponding with each of a plurality of scattering angles and each of a plurality of polarisation states, at the same time. This enables a lot of information about a sample to be obtained in a short time.

The different polarisation states received at the detector 404 map directly to the components of the Stokes vector, as described above with reference to equation (2), so the Stokes vector for each wavelength and scattering angle can be determined. Although for ease of explanation, the components of the Stokes vector that are sampled in Figure 10 are those that enable facile determination of the parameters of equation (2) it will be understood that four appropriately selected different polarisation states can be used to determine the four parameters that comprise the Stokes vector.

Mie scattering ellipsometry has a 'Brewster angle' around the 90 degree scattering angle and that only a limited range of angles around this value may need to be recorded to effectively determine the ellipsometric quantities, *tan ψ* and *δ*. For example, the limited range of scattering angles may comprise 90 degrees +/- 2 degrees to +/- 10 degrees.

**In** an alternative arrangement, a time-resolved approach may be used, in which a controllable polarisation filter is provided after the sample (and/or before the sample) in order to sample different polarisation states of scattered light at the detector in a sequence. The Fourier transform spectrometer may require a number of mirror excursions for a sufficient signal to noise measurement for each polarisation state that is used to determine the Stokes vector. Some analysis is particularly applicable to samples are not dynamic (i.e. an ensemble particle sample that does not change average properties over the measurement duration). With a sufficiently bright light source and quickly reconfigurable polarising filters, relatively fast measurements may be possible, which may enable single particle analysis. Such functionality has significant implications for the characterisation of complex media (mixed size, morphology and composition) to high spectral resolution and material specificity and well below the imaging resolution limit.

### Sequential stokes vector element characterisation

Figure 11 shows an example embodiment comprising an adjustable polarising filter 220. This embodiment is similar to that of Figure 7, but in principle a similar approach can be used with any of the arrangements described herein. The adjustable polarising filter 220 allows a specific polarisation state to be selected for detection, under the control of the instrument. A sequence of polarisation states can be cycled through in order to characterise a Stoke vector of the scattered light at each of a plurality of scattering angles as described above. Embodiments may include an adjustable polarising filter in the illumination optical path and/or in the detection optical path (as shown in this example).

The adjustable polarising filter may comprise a carousel with a plurality of different polarising filters, wherein movement of the carousel presents a different polarising filter in the detection optical path. The carousel may rotate to switch filters, for example. The carousel may be coupled to an actuator, for automatic switching of the polarising filter.

While certain embodiments may include both the illumination and detection adjustable polarising filters, it will be understood that one of these adjustable polarising filters is sufficient to provide for the sequential selection of different polarisation states for analysis.

### Calibration

As already discussed, Fourier transform spectrometers may comprise an internal reference light source, typically a narrow line-width laser. A calibration of the spectral radiance responsivity may also be useful, to remove differences from instrument to instrument.

Laser diffraction instruments also require radiometric calibration to allow for variation in instrument build, variation in sensitivity across (typically) multiple detectors, etc. This is typically achieved using a series of highly monodisperse, standard samples of known size and composition or a high-quality diffusor.

In embodiments that are polarisation sensitive, the polarisation selection should preferably be calibrated in order to provide accurate measurements.

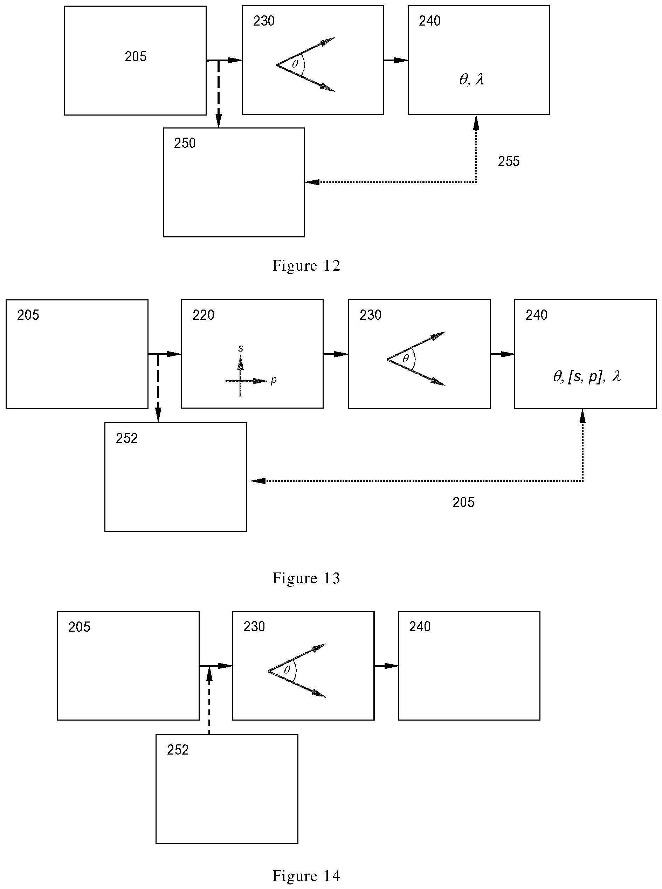

Figure 12 illustrates calibration of an apparatus according to an embodiment, in which a spectrum is obtained for the illuminating light source 205 from a calibrated spectrometer 250 and compared with a spectrum obtained at each scattering angle from the diffractive spectrometer 240 to be calibrated (i.e. the interferometer and detector and associated optics). A diffuser 230 (e.g. an opal diffuser) is used to scatter the illuminating light beam with a known angular distribution of intensity (e.g. Lambertian). The comparison 255 between the spectrum determined by the calibrated spectrometer 250 and each spectrum obtained from the diffractive spectrometer 240 thereby enables a sensitivity at each scattering angle to be calibrated.

Figure 13 illustrates calibration of an apparatus that comprises a polarisation state selector, which is substantially the same as that of Figure 12, but includes a polarisation state selector 220 before the diffuser 230, to enable each polarisation state to be calibrated. It is preferable that the polarisation state selector 220 is before the diffuser, since that means that the polarisation state selector can be smaller.

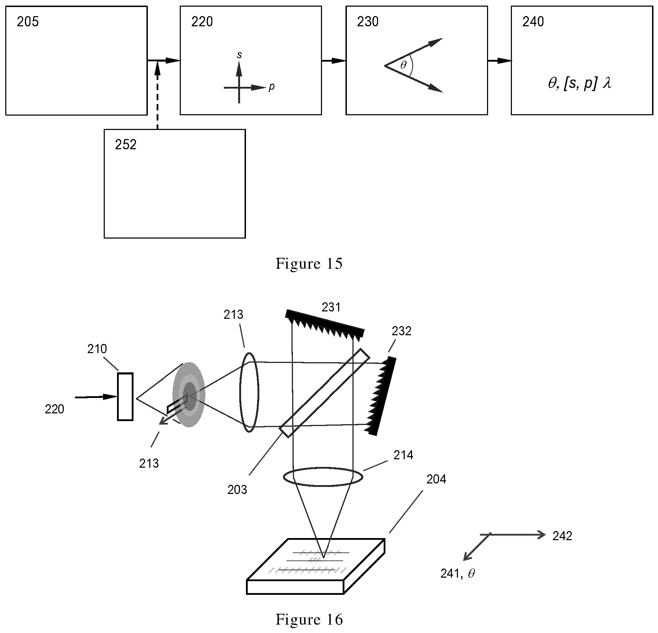

Figures 15 and 16 show an alternative calibration arrangement in which a calibrated light source 252 is instead used to calibrate the diffractive spectrometer 240. In this case, since the spectrum and intensity of the light source is already known, a calibration can be performed without calibrated spectrometer.

### Spatial heterodyne spectroscopy

Spatial heterodyne spectrometry provides an alternative to Fourier transform spectrometers, replacing the mirrors with gratings to convert the temporal frequency spectrum, *F*(*w*) into spatial fringes, *F*(*k*), where *k = w*/*c* and allowing the interferogram to be measured on a spatially resolved detector. Advantages of spatial heterodyne spectrometry over Fourier transform spectroscopy include no moving parts, which may reduce wear and extend the overall lifetime of an instrument.

Figure 16 shows an arrangement for particle analysis using spatial heterodyning. A sample cell 210 is illuminated by illuminating light beam 220, and scattered light is produced by the interaction of the light beam 220 with particles of a sample contained in the sample cell 210. The scattered light is sampled using entrance slit 213, which is arranged to receive a range of scattering angles, each position along the length of the slit 213 (in the direction of the arrow) receiving a different scattering angle. A collecting lens collimates the scattered light, with different scattering angles corresponding with different spatial positions within the collimated beam of scattered light. The beam of scattered light is received at a beam splitter 203, which provides a first portion of the scattered light to a first grating 231 and a second portion of the scattered light to a second grating 232. The beam splitter 203 recombines the light from the first and second gratings 231, 232. The first and second gratings 231, 232 are configured to produce an interferogram (row, 242) for each scattering angle (column, 241) at the array detector 204.

This arrangement gathers a smaller amount of scattered light than a Fourier transform device because of the entrance 213, but the high spectral resolving power of interferometric spectroscopy remains.

Although specific examples have been described, it will be understood that variations are possible, within the scope of the appended claims.

## Claims

1. A particle characterisation apparatus comprising:
a sample cell for containing or supporting a sample comprising particles;
a light source configured to produce a polychromatic illumination beam for illuminating the sample along an illumination optical path, thereby producing scattered light from the interaction of the illumination beam with particles of the sample;
a detector arranged to receive and detect the scattered light propagating along a detection optical path and thereby detect a variation in scattering intensity with respect to scattering angle; and
an interferometer, the interferometer comprising:
a moveable mirror in a first optical path;
a fixed mirror in a second optical path; and
a combiner arranged to: i) split an input light field onto the first optical path and the second optical path; and ii) produce an output light field by combining light from the first optical path and the second optical path; and wherein
the apparatus is configured to determine a spectrum of scattered light at each of a plurality of scattering angles by performing Fourier transform spectroscopy, wherein performing Fourier transform spectroscopy comprises adjusting a length of the first optical path using the moving mirror.

2. The apparatus of claim 1, wherein the interferometer is disposed in the detection optical path and the sample cell is disposed between the interferometer and the detector, or wherein the interferometer is disposed in the illumination optical path and the sample cell is disposed between the light source and the sample cell.

3. The apparatus of any preceding claim, wherein a polarising filter or a polarising beam splitter is disposed in the detection optical path.

4. The apparatus of claim 3, wherein the detector comprises a first detector portion that detects a first polarisation state of scattered light, and a second detector portion that detects a second polarisation state of scattered light, with the first polarisation state different to the second polarisation state.

5. The apparatus of any preceding claim, wherein the light source comprises a broadband light source and a narrow-band light source, wherein the broadband light source produces light with a spectral bandwidth, FWHM, of at least 500nm and the narrow-band light source produces light with a spectral bandwidth of less than 50nm.

6. The apparatus of any preceding claim, wherein the light source is configured to produce light comprising wavelengths with a spectral bandwidth of at least 500nm, or at least 1000nm or at least 2000nm, or at least 3000nm.

7. The apparatus may comprise a processor configured to:
measure a background, corresponding with a measurement from the detector when the sample cell is loaded with a background sample;
measure a sample, corresponding with a measurement from the detector with the sample cell loaded with the sample; and
subtract the background from the sample measurement to determine a corrected sample measurement.

8. The apparatus of any preceding claim, wherein the apparatus is configured to obtain at least one interferogram, obtained by varying the length of the first optical path by moving the moveable mirror and measuring light received at the detector.

9. The apparatus of any preceding claim, wherein the apparatus is configured to obtain a reference interferogram, measured with no sample present, and a sample interferogram measured with a sample present in the sample cell, wherein the apparatus comprises a processor configured to determine the absorption spectrum of the sample with reference to the reference interferogram and the sample interferogram.

10. The apparatus of claim 9, wherein the apparatus is configured to determine the absorption spectrum for each of a plurality of different scattering angles, the different scattering angles comprising at least one of: a forward scattering angle, a side scattering angle, and a backward scattering angle.

11. The apparatus of any preceding claim, further comprising an adjustable polarising filter in the detection optical path, configured to control a polarisation state received at the detector.

12. The apparatus of any of claims 1 to 10, wherein the apparatus comprises a plurality of different polarising filters and at least one beam splitter, the at least one beam splitter and the plurality of different polarising filters arranged to distribute different polarisation states of scattered light to different portions of the detector, so that each of a plurality of polarisation states of scattered light can be detected at the same time.

13. A particle characterisation apparatus comprising:
a sample cell for containing or supporting a sample comprising particles;
a light source configured to produce a polychromatic illumination beam for illuminating the sample along an illumination optical path, thereby producing scattered light from the interaction of the illumination beam with particles of the sample;
a detector arranged to receive and detect the scattered light propagating along a detection optical path and thereby detect a variation in scattering intensity with respect to scattering angle; and
an interferometer, the interferometer comprising:
a first grating in a first optical path;
a second grating in a second optical path; and
a combiner arranged to: i) split an input light field onto the first optical path and the second optical path; and ii) produce an output light field by combining light from the first optical path and the second optical path; and wherein
the apparatus is configured to perform spatial heterodyne spectroscopy.

14. The apparatus of claim 13, wherein the sample cell is disposed between the light source and the interferometer, wherein the input light field to the interferometer comprises the scattered light propagating along the detection optical path.

15. The apparatus of claim 14, wherein the interferometer comprises an entrance slit configured to receive a range of scattering angles.
